# EUROPEAN PATENT APPLICATION

(11) **EP 4 059 801 A1**
(43) Date of publication of application: **21.09.2022**
(21) Application number: 21712938.6
(22) Date of filing: 18.01.2021
(51) Int. Cl.: B61G 11/18

(54) **SHOCK ABSORBING DEVICE**

(71) Applicant: Korea Railroad Research Institute, Uiwang-si, Gyeonggi-do 16105 (KR)
(72) Inventor: KWON, Taesoo, Suwon-si Gyeonggi-do 16692 (KR); KIM, Jinsung, Anyang-si Gyeonggi-do 13913 (KR); JUNG, Hyun-Seung, Seongnam-si Gyeonggi-do 13600 (KR); HWANG, Junhyeok, Incheon 22521 (KR)
(74) Representative: Petraz, Gilberto Luigi
(86) International application number: PCT/KR2021/000646
(87) International publication number: WO 2022/154145

(57) **Abstract**

Generally, an impact absorbing device is proposed. More particularly, the impact absorbing device is mounted to a railroad car coupler, to a buffer stop installed at an end of a railroad track, or to side buffers provided at opposite sides of an end part of a railroad car and doubly absorbs impact during the application of the impact thereto such that impact occurring during the coupling of railroad cars to each other and large impact occurring during collision of railroad cars can be absorbed, and has an overall simple structure such that the impact absorbing device is easily attached to and detached from the railroad car coupler, the buffer stop installed at an end of a railroad track, or the side buffers provided at opposite sides of an end part of a railroad car, so maintenance costs of the impact absorbing device can be reduced.

## Description

### Technical Field

The present disclosure relates generally to an impact absorbing device. More particularly, the present disclosure relates to an impact absorbing device, which is mounted to a railroad car coupler, to a buffer stop installed at an end of a railroad track, or to side buffers provided at opposite sides of an end part of a railroad car and doubly absorbs impact during the application of the impact thereto such that impact occurring during the coupling of railroad cars to each other and large impact occurring during collision of railroad cars can be absorbed, and has an overall simple structure such that the impact absorbing device is easily attached to and detached from the railroad car coupler, the buffer stop installed at an end of a railroad track, or the side buffers provided at opposite sides of an end part of a railroad car, so maintenance costs of the impact absorbing device can be reduced.

### Background Art

Generally, multiple railroad cars are coupled to each other to form a train. To this end, a coupler is provided at each of the front and rear part of each of the railroad cars so as to couple the railroad cars to each other.

The coupler is mounted to the center sill of an underframe to support the weight of the railroad car, passengers, and freight. The coupler is mounted to the center sill through an impact absorbing device reducing impact which occurs due to the collision of the coupler of each of the railroad cars with each other.

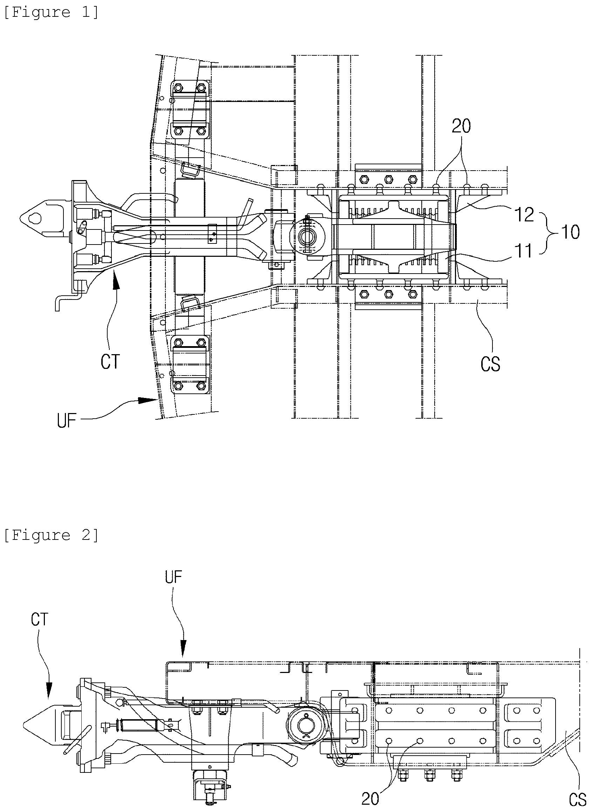

As illustrated in FIGS. 1 and 2, a conventional impact absorbing device for a railroad car coupler is composed of a buffer part 10 installed at an end of the coupler CT and coupling the coupler CT to the center sill CS of the underframe UF, and multiple fixing rivets 20 fixing the buffer part 10 to the center sill CS.

Here, the buffer part 10 is composed of a buffer 11 such as a multiple plate-type rubber buffer and a bracket 12, wherein the buffer 11 absorbs impact transmitted through the coupler CT.

However, in the conventional impact absorbing device for a railroad car coupler, the buffer part 10 is securely fixed to the center sill CS through the multiple fixing rivets 20. Accordingly, when impact beyond the amount of impact which the buffer part 10 can absorb is applied to the coupler, the impact which is not absorbed by the buffer part 10 is transmitted to the center sill CS through the multiple fixing rivets 20, so the center sill CS or the buffer part 10 is damaged.

Accordingly, in the case of a strong collision of a railroad car, the center sill CS and the underframe UF as well as the coupler CT and the impact absorbing device are also damaged. It is difficult to repair the underframe UF and the center sill CS of the railroad car, and repair thereof incurs high costs and takes much time.

In addition, due to the inability to absorb impact reliably in this way, the amount of impact applied to passengers or freight inside railroad car is increased, and due to the railroad cars raised by the collision of the railroad cars with each other, the corresponding railroad cars may be derailed. Accordingly, such derailment of the railroad cars may injure passengers or damage freight.

### Disclosure

### Technical Problem

The present disclosure has been made keeping in mind the above problems occurring in the prior art, and the present disclosure is intended to propose an impact absorbing device, which is mounted to a railroad car coupler, to a buffer stop installed at the end of a railroad track, or to side buffers provided at opposite sides of an end part of a railroad car so as to buffer impact applied thereto, and includes: a first buffer part composed of a buffer bar configured to have a bar shape, a housing provided at the outside of the buffer bar, and a buffer member provided between the buffer bar and the housing and configured to absorb the impact; and a second buffer part composed of a tube expansion member provided at the outside of the first buffer part and a buffer tube expanded by the tube expansion member and configured to absorb impact, whereby impact is doubly buffered such that impact occurring during the coupling of the railroad cars to each other and impact occurring during collision of the railroad cars can be reliably absorbed.

In addition, the present disclosure is intended to propose an impact absorbing device, in which the first buffer part allowing impact to be buffered by an elastic member installed at a rear part of a coupling bar and the second buffer part provided at the outside of the first buffer part and configured to absorb impact in the process of expanding the buffer tube are all coupled to a mounting plate which is fixed to an installation position such as the center sill of the railroad car, whereby without separately installing the first and second buffer parts, only the mounting plate is fixed to the installation position to be mounted to the railroad car, which leads to the easy attachment/detachment of the impact absorbing device, so maintenance costs of the impact absorbing device can be reduced.

### Technical Solution

In order to accomplish the above objectives, according to the present disclosure,

an impact absorbing device absorbing an impact during application of the impact thereto includes: a first buffer part composed of: a buffer bar configured to have a bar shape; a housing provided at an outside of the buffer bar; and a buffer member provided between the buffer bar and the housing.

Here, a first installation groove may be formed in an outer circumferential surface of the buffer bar, a second installation groove may be formed in an inner circumferential surface of the housing such that the second installation groove corresponds to the first installation groove, and an inner part of the buffer member may be inserted to the first installation groove and an outer part of the buffer member may be inserted to the second installation groove.

In addition, a second buffer part may be provided at an outside of the first buffer part, wherein the second buffer part may be composed of a buffer tube provided at an outside of the housing, and a tube expansion member provided at a front outside of the housing and at an inside of the buffer tube.

Here, a first holding step may be formed on a front outer circumferential surface of the housing by protruding outward therefrom, and a second holding step may be formed on an inner circumferential surface of the tube expansion member by protruding inward therefrom such that the second holding step corresponds to the first holding step, so the tube expansion member is moved rearward by the housing.

In this case, the tube expansion member may be composed of a pressing part formed by inclining in direction to an outside, and a first flange formed at a front part of the pressing part by protruding outward therefrom.

Meanwhile, the tube expansion member may include cutting holes formed between the pressing part and the first flange along an outer circumferential surface of the tube expansion member.

Here, a mounting plate allowing the first flange to be mounted thereto may be provided, wherein a mounting hole may be formed in a center part of the mounting plate such that the first and second buffer parts are inserted to the mounting hole.

In this case, a second flange may be formed at a front outside of the buffer tube, the second flange being located to be in contact with a rear surface of the first flange, wherein the first and second flanges may be coupled to an outer surface of the mounting hole.

In addition, the buffer member may be configured to have a ring shape.

Furthermore, the buffer member may be configured to have a spiral shape.

### Advantageous Effects

According to the present disclosure having the above configuration, the impact absorbing device is mounted to a railroad car coupler, to a buffer stop installed at the end of a railroad track, or to side buffers provided at opposite sides of an end part of a railroad car so as to buffer impact applied thereto, and includes: a first buffer part composed of a buffer bar configured to have a bar shape, a housing provided at the outside of the buffer bar, and a buffer member provided between the buffer bar and the housing and configured to absorb the impact; and a second buffer part composed of a tube expansion member provided at the outside of the first buffer part and a buffer tube expanded by the tube expansion member and configured to absorb impact, whereby impact is doubly buffered such that impact occurring during the coupling of the railroad cars to each other and impact occurring during collision of the railroad cars can be reliably absorbed.

In addition, according to the impact absorbing device of the present disclosure, the first buffer part allowing impact to be buffered by an elastic member installed at a rear part of a coupling bar and the second buffer part provided at the outside of the first buffer part and configured to absorb impact in the process of expanding the buffer tube are all coupled to a mounting plate which is fixed to an installation position such as the center sill of the railroad car, whereby without separately installing the first and second buffer parts, only the mounting plate is fixed to the installation position to be mounted to the railroad car, which leads to the easy attachment/detachment of the impact absorbing device, so maintenance costs of the impact absorbing device can be reduced.

### Description of Drawings

FIG. 1 is a top plan view of a connection part of a railroad car including a conventional impact absorbing device for a railroad car coupler.
FIG. 2 is a side view of the connection part of the railroad car including the conventional impact absorbing device for a railroad car coupler.
FIG. 3 is a perspective view of an impact absorbing device according to an embodiment of the present disclosure.
FIG. 4 is a cross-sectional view of the impact absorbing device according to the present disclosure.
FIG. 5 is an exploded perspective view of the impact absorbing device according to the present disclosure.
FIG. 6 is an exploded perspective view of a first buffer part of the impact absorbing device for a coupler according to another embodiment of the present disclosure.
FIG. 7 is a perspective view of a buffer member according to the embodiment of FIG. 6.

### Best Mode

Hereinbelow, the exemplary embodiments of the present disclosure will be described in detail with reference to the accompanying drawings. The same reference numerals are used for the same components in the drawings, and duplicate descriptions for the same components are omitted. Additionally, it should be understood that the present disclosure may be embodied in multiple different forms, and is not limited to the described embodiments.

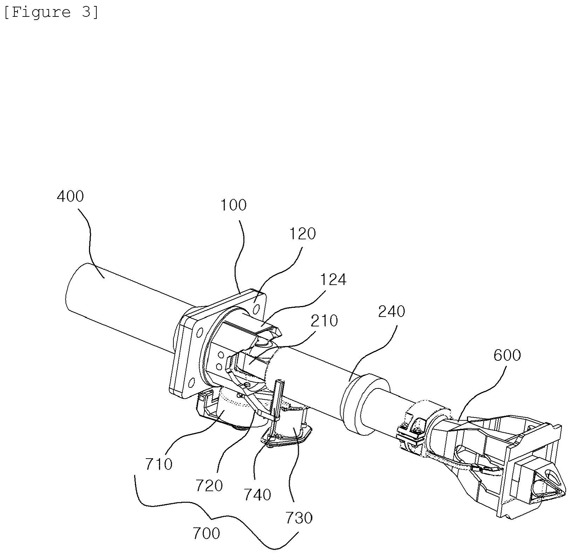

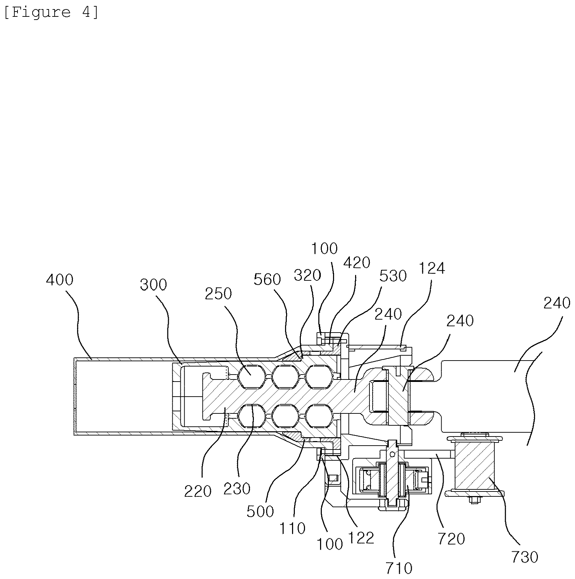

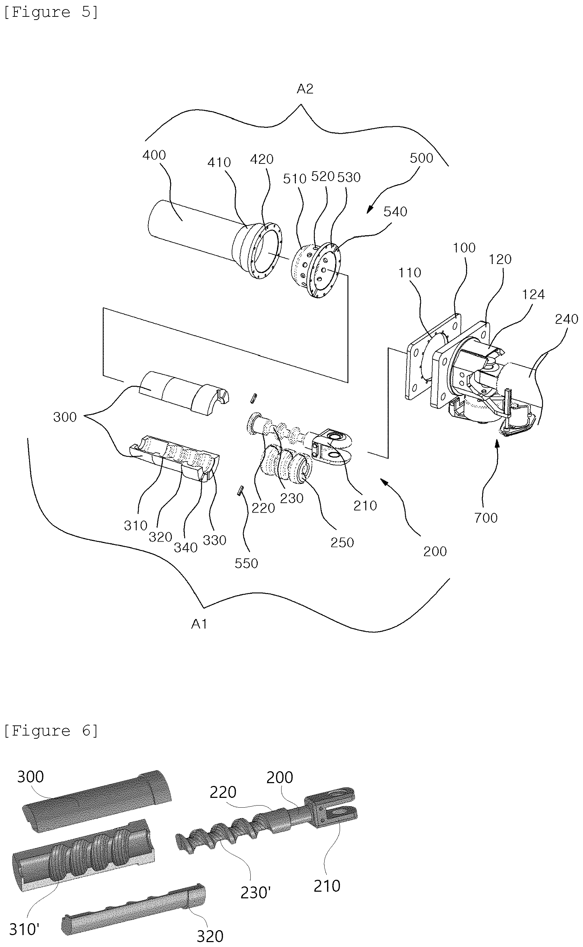

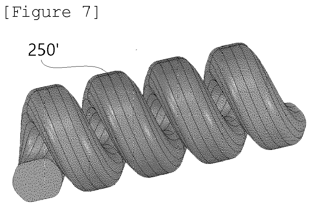

FIG. 3 is a perspective view of an impact absorbing device according to an embodiment of the present disclosure; FIG. 4 is a cross-sectional view of the impact absorbing device according to the present disclosure; FIG. 5 is an exploded perspective view of the impact absorbing device according to the present disclosure; FIG. 6 is an exploded perspective view of a first buffer part of the impact absorbing device for a coupler according to another embodiment of the present disclosure; and FIG. 7 is a perspective view of a buffer member according to the embodiment of FIG. 6.

The present disclosure relates to the impact absorbing device, which is mounted to the coupler 600 of a front part of the center sill of the railroad car, to the buffer stop installed at the end of a railroad track, or to side buffers provided at the opposite sides of an end part of a railroad car so as to buffer impact applied thereto. For convenience of description, the description will be made on the basis of the state of the impact absorbing device mounted to the coupler 600.

First, as illustrated in FIGS. 3 to 5, the impact absorbing device of the present disclosure is configured by including the first buffer part A1 provided at the rear part of the coupler 600, wherein the front end part of the first buffer part A1 is mounted to a mounting plate 100 fixed to the front part of the center sill formed at the lower part of the railroad car.

Accordingly, when impact occurring during the coupling of railroad cars to each other or during driving of a railroad car is transmitted to the first buffer part A1 through the coupler 600, the first buffer part A1 absorbs the impact so as to minimize the transmission of the impact to passengers on the railroad car.

Of course, in the case of the buffer stop installed at the end of a railroad track, or the side buffers provided at the opposite sides of the end part of a railroad car instead of the coupler 600, it is natural to mount a blocking plate 100 to the corresponding installation position.

In addition, the first buffer part A1 is composed of a buffer bar 200 hinged to a rear part of the coupler 600; a housing 300 provided at the outside of the rear part of the buffer bar 200, and the buffer member 250 provided between the buffer bar 200 and the housing 300.

Here, first installation grooves 230 are formed in the outer circumferential surface of the buffer bar 200, and second installation groove 310 are formed in the inner circumferential surface of the housing 300 such that the second installation grooves 310 correspond to the first installation grooves 230, so the inner part of the buffer member 250 is inserted to the first installation grooves 230, and the outer part of the buffer member 250 is inserted to the second installation grooves 310.

In this case, the buffer member 250 is made of an elastic material such as rubber or synthetic rubber, and is configured to have a ring shape, and is inserted to each of the first installation grooves 230 and the second installation grooves 310 which are formed at predetermined intervals.

Meanwhile, the buffer bar 200 is composed of an impact-absorption part 220 located inside the housing 300 and a hinge part 210 formed at the front end of the impact-absorption part 220, wherein an end part of a coupling member 240 coupled to the rear end of the coupler 600 is hinged to the hinge part 210.

Here, the housing 300 is configured to have a cylindrical shape. As illustrated in FIG. 5, the housing 300 is configured to have an upper member (not shown) and a lower member (not shown), and the impact-absorption part 220 and the buffer member 250 of the buffer bar 200 are received in the housing 300. A through hole 330 is formed in the front part of the housing 300 such that the front part of the buffer bar 200 protrudes through the through hole 330.

Accordingly, as described above, the housing 300 constituting the first buffer part A1 is mounted to the front part of the center sill through the mounting plate 100, and the buffer bar 200 is coupled to the coupler 600 through the coupling member 240 coupled to the hinge part 210 protruding through the through hole 330 formed at the front end of the housing 300, whereby impact applied to the coupler 600 is absorbed in the process of the rearward movement of the buffer bar 200 due to the buffer member 250 such that the impact applied to the railroad car is reduced.

Additionally, according to another embodiment of the present disclosure, as illustrated in FIGS. 6 and 7, first installation grooves 230' formed in the outer circumferential surface of the impact-absorption part 220 of the buffer bar 200 located inside the housing 300 and second installation grooves 310' formed in the inner circumferential surface of the housing 300 are configured to have spiral shapes.

Here, a buffer member 250' inserted to and held in the first and second installation grooves 230' and 310' is also configured to have a spiral shape. Accordingly, the contact areas of the impact-absorption part 220, the buffer member 250', and the housing 300 with each other are increased, which leads to more reliable absorption of impact applied thereto.

In this case, as illustrated in the drawing, the housing 300 may be configured to be divided into an upper part and a lower part, but according to a situation, may have multiple parts to be coupled to each other.

Furthermore, a second buffer part A2 is provided at the outside of the first buffer part A1. The second buffer part A2 is composed of a tube expansion member 500 provided at the front outside of the housing 300 and a buffer tube 400 provided to cover the outside of the housing 300 and the outside of the tube expansion member 500.

Here, the buffer tube 400 is configured to have a pipe shape having an inner diameter corresponding to the outer diameter of the housing 300 such that the buffer tube 400 is in close contact with the outer surface of the housing 300, and a tube expansion part 410 is formed at the front end of the buffer tube 400 such that the tube expansion member 500 is inserted to the tube expansion part 410.

In this case, a first holding step 320 is formed on the front outer circumferential surface of the housing 300 by protruding outward therefrom, and a second holding step 560 is formed on the rear part of the inner circumferential surface of the tube expansion member 500 by protruding inward therefrom such that the second holding step 560 corresponds to the first holding step 320.

Accordingly, when impact occurring during the coupling of the railroad cars to each other or during driving of a railroad car is so great that the first buffer part A1 cannot absorb the impact, and the first buffer part A1 is moved rearward, the tube expansion member 500 is moved rearward by the first and second holding steps 320 and 560, so in the process of the expansion of the buffer tube 400, the impact is absorbed.

Accordingly, according to the present disclosure, a predetermined impact or less is absorbed by the first buffer part A1, and great impact which the first buffer part A1 cannot absorb is absorbed by the second buffer part A2, so injuries to passengers on the railroad car can be prevented as much as possible.

Meanwhile, the tube expansion member 500 is composed of a pressing part 510 formed at a rear part thereof by inclining in a direction of the outside of the tube expansion member 500 and a first flange 530 formed by protruding toward an outside of the pressing part 510.

Here, a mounting hole 110 is formed through the center part of the mounting plate 100 in a front-to-rear direction, wherein the first buffer part A1 is inserted to the mounting hole 110. When the tube expansion member 500, together with the first buffer part A1, is inserted to the mounting hole 110, the first flange 530 of the tube expansion member 500 is fixed to the front outside of the mounting hole 110.

In this case, a second flange 420 is formed at the front end of the buffer tube 400 by protruding outward therefrom. The second flange 420 is located between the mounting plate 100 and the first flange 530 and is mounted to the mounting plate 400.

In addition, a second coupling groove 340 is formed in the front surface of the housing 300 such that the second coupling groove 340 communicates with the outside of the housing 300, and a first coupling groove 540 is formed in the front surface of the first flange 530 formed at the front end of the tube expansion member 500 such that the first coupling groove 540 communicates with the second coupling groove 340.

Here, a fastening bar 550 is inserted to the first and second coupling grooves 540 and 340, and thus the housing 300 and the tube expansion member 500 are more securely fastened to each other.

In this case, a cover member 120 is provided at the front part of the mounting plate 100. A receiving groove 122 receiving the first and second flanges 530 and 420 is formed at the rear part of the cover member 120, and a protection part 124 protecting the hinge part 210 of the buffer bar 200 is formed at the front part of the cover member 120.

Meanwhile, the tube expansion member 500 has cutting holes 520 formed at predetermined intervals between the pressing part 510 and the first flange 530 along the outer circumferential surface of the tube expansion member 500. As described above, when the impact which the first buffer part A1 cannot absorb is applied, the pressing part 510 which is the rear part of the tube expansion member 500 is cut from the cutting hole 520.

Here, in a process in which the tube expansion member 500 is cut into a front part and a rear part relative to the cutting hole 520, impact is partially absorbed, and the cut pressing part 510 is moved rearward by the first holding step 320 formed on the outer surface of the front end part of the housing 300 and the second holding step 560 formed on the inner circumferential surface of the pressing part 510, whereby in the process in which the buffer tube 400 is expanded, the remainder of the impact is absorbed.

Accordingly, in the present disclosure, the first buffer part A1 firstly absorbs impact, and when greater impact is applied, the tube expansion member 500 is cut into the front part and the rear part. In the process, the impact is secondly absorbed. Next, in the process in which the pressing part 510 expands the buffer tube 400, the impact is thirdly absorbed, so even strong impact can be reliably absorbed.

In addition, in the present disclosure, the first buffer part A1 allowing impact to buffered by the buffer member 250 installed at the rear part of the coupler 600 and the second buffer part A2 provided at the outside of the first buffer part A1 and configured to absorb the impact in the process of the expansion of the buffer tube 400 are all coupled to the mounting plate 100.

Accordingly, when mounted to the center sill, the first and second buffer parts A1 and A2 are not separately mounted to the center sill, and only the mounting plate 100 is fixed to the front end of the center sill such that the first and second buffer parts A1 and A2 are mounted to the center sill to be mounted to the railroad car, so the first and second buffer parts A1 and A2 can be easily attached to and detached from the railroad car and thus maintenance cost thereof can be reduced.

Meanwhile, a centering device 700 is provided at a lower part of the protection part 124 configured by protruding from the front part of the cover member 120. The centering device 700 includes: a centering member 710 provided at the lower part of the protection part 124; a centering bar 720 installed to be rotated by the centering member 710; side-part support members 740 coupled to the front end of the centering bar 720 and supporting the opposite sides of the coupling member 240; and a lower-part support member 730 provided at the lower part of each of the side-part support members 740 and supporting the lower part of the coupling member 240.

Here, the centering member 710 supports the centering bar 720 such that the centering bar 720 is constantly located in a predetermined direction, so although the coupler 600 is rotated leftward or rightward relative to the hinge part 210 according to a situation, the coupler 600 is controlled to be stably moved to the initial position of the coupler 600.

Although the exemplary embodiments of the present disclosure have been described for illustrative purposes, the scope of the claims of the present disclosure is not limited thereto, but reaches up to what is within scope substantially equal to the embodiments of the present disclosure. Those skilled in the art will appreciate that various modifications are possible, without departing from the spirit of the present disclosure.

## Claims

1. An impact absorbing device absorbing an impact during application of the impact thereto, the device comprising:
a first buffer part composed of:
a buffer bar configured to have a bar shape;
a housing provided at an outside of the buffer bar; and
a buffer member provided between the buffer bar and the housing.

2. The device of claim 1, wherein a first installation groove is formed in an outer circumferential surface of the buffer bar,
a second installation groove is formed in an inner circumferential surface of the housing such that the second installation groove corresponds to the first installation groove, and
an inner part of the buffer member is inserted to the first installation groove and an outer part of the buffer member is inserted to the second installation groove.

3. The device of claim 1, wherein a second buffer part is provided at an outside of the first buffer part,
wherein the second buffer part is composed of a buffer tube provided at an outside of the housing, and a tube expansion member provided at a front outside of the housing and at an inside of the buffer tube.

4. The device of claim 3, wherein a first holding step is formed on a front outer circumferential surface of the housing by protruding outward therefrom, and
a second holding step is formed on an inner circumferential surface of the tube expansion member by protruding inward therefrom such that the second holding step corresponds to the first holding step, so the tube expansion member is moved rearward by the housing.

5. The device of claim 4, wherein the tube expansion member is composed of a pressing part formed by inclining in direction to an outside, and
a first flange formed at a front part of the pressing part by protruding outward therefrom.

6. The device of claim 5, wherein the tube expansion member comprises cutting holes formed between the pressing part and the first flange along an outer circumferential surface of the tube expansion member.

7. The device of claim 5, wherein a mounting plate allowing the first flange to be mounted thereto is provided,
wherein a mounting hole is formed in a center part of the mounting plate such that the first and second buffer parts are inserted to the mounting hole.

8. The device of claim 7, wherein a second flange is formed at a front outside of the buffer tube, the second flange being located to be in contact with a rear surface of the first flange,
wherein the first and second flanges are coupled to an outer surface of the mounting hole.

9. The device of claim 2, wherein the buffer member is configured to have a ring shape.

10. The device of claim 2, wherein the buffer member is configured to have a spiral shape.
